(19)

**Europäisches Patentamt**

**European Patent Office**

**Office européen des brevets**

(11) **EP 4 475 093 A1**

(12) **EUROPEAN PATENT APPLICATION**

(43) Date of publication:
**11.12.2024 Bulletin 2024/50**

(21) Application number: **23178560.1**

(22) Date of filing: **09.06.2023**

(51) International Patent Classification (IPC):
**G06V 20/56** (2022.01)　　**G06V 10/44** (2022.01)

(52) Cooperative Patent Classification (CPC):
**G06V 20/588; G06V 10/457**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Volkswagen Aktiengesellschaft
38440 Wolfsburg (DE)**

(72) Inventors:
- **Fricke, Jenny
  38118 Braunschweig (DE)**
- **Prof. Dr. Hecker, Peter
  38536 Meinersen (DE)**

(54) **METHOD FOR IDENTIFYING SECTIONS BELONGING TO ONE LANE BOUNDARY OF A LANE OF A ROAD**

(57)　The invention relates to a method for identifying sections (13) belonging to one lane boundary (10) of a lane (11) on a road (12) comprising: providing (S3) multiple section information (22) each describing a section (13); for each section information (22) determining (S4) an orientation information (28) describing an orientation of the section (13) relative to a reference line (26); if the orientation information (28) of at least three adjacent sections (23, 24, 25) coincide within a tolerance range (29), verifying (S6) if these sections (23, 24, 25) are all on one line by applying a line determination algorithm (30) on the section information (22); only if the sections (23, 24, 25) are all on one line, identifying (S7) the sections (23, 24, 25) as belonging to one lane boundary (36); providing (S8) a lane boundary information (37) that describes the one lane boundary (36).

Fig. 3

EP 4 475 093 A1

**Description**

The invention relates to a method for identifying sections belonging to one lane boundary of a lane of a road. The invention also relates to a control device, a vehicle and a computer program product to perform such a method.

A vehicle may comprise a driver assistance system or another vehicle function that requires information about at least one static object in an environment of the vehicle. The static object may be a drivable lane of a road. A high definition map may comprise the information on the drivable lane. A navigation system and/or a storage device of the vehicle may store the map. However, the information on the drivable lane that is comprised by the map may be defective and/or outdated, for example, because of errors during map generation or due to short term changes in the environment, respectively. For example, a construction site may cause short term changes in a course of the lane.

It may be assumed that the vehicle is configured to detect differences between reality, for example, provided by sensor data, and information stored in the high definition map. Detecting such differences typically comprises a detection and classification of new objects in the environment such as, for example, yellow lane marking at the construction site. However, the new objects require interpretation. In particular, they require identifying which detected new object belongs to one lane and which one belongs to another lane. As long as this information has not been determined the driver assistance system or the other vehicle function cannot operate.

In this context, it is particularly important to first identify the objects in the environment that belong to one lane boundary of a lane on the road. The lane boundary may be, for example, a dashed or continuous lane marking on a surface of the road and/or a curb of the road. Afterwards, the vehicle may determine drivable lanes and adapt an operation of the vehicle to the determined drivable lanes. However, first a solution is required to identify all sections of lane boundaries that belong to exactly one lane boundary.

US 2014/0358321 A1 discloses a system and a method for lane boundary estimation and host vehicle position and orientation. A lane boundary position enables tracking of the host vehicle position and orientation inside the lane. It also enables classifying in-lane, adjacent lanes and other lanes vehicles.

US 2019/0266418 A1 discloses real-time detection of lanes and boundaries by autonomous vehicles. An image is received and applied to a machine learning model to compute a segmentation mask representative portions of the image corresponding to lane markings of the driving surface of the vehicle. By analysis of the segmentation mask lane marking types are determined, and lane boundaries are generated by performing curve fitting on the lane markings corresponding to each of the lane marking types.

US 10,867,190 B1 discloses a method and a system for lane detection. An image-processing module trained by machine learning is used to generate correspondence mapping data based on an image pair of a first and second image. The correspondence mapping data defines correspondence between a first lane boundary group of the first image and a second lane boundary group of the second image.

It is the object of the invention to provide a reliable solution to identify a lane boundary in an environment of the vehicle.

The independent claims solve the object.

A first aspect of the invention relates to a method for identifying sections belonging to one lane boundary of a lane on a road. The lane boundary is, for example, a dashed or continuous lane marking on a surface of the road and/or a curb of the road. The vehicle typically cannot detect the lane boundary as one object. Instead, it detects multiple sections of one lane boundary or multiple lane boundaries. The respective section may be an object described by an image of the road, wherein the object has been identified as a part of a lane boundary. The section is, for example, a group of pixels of the image. It is assumes that means are available to detect individual sections of a lane boundary of a lane on a road.

The method comprises providing multiple section information. The respective section information may be captured and/or received by the vehicle. Each section information describes a section of a lane boundary on the road. Hereby, for example, all sections belonging to multiple individual lane boundaries that are described by one image are listed. For each section the section information may describe a position of the section and an extension of the section. In case of a non-connected lane boundary, such as dashed lane markings, the section information may describe one dash of the non-connected lane boundary. In case of a connected lane boundary, such as the continuous lane marking and/or the curb, the section information may describe a part of the lane boundary. A size of the part may depend on a predetermined size threshold. If the vehicle receives the multiple sensor information, an external device such as another vehicle, a backend, a server, and/or a cloud-server may transmit the sensor information to the vehicle via vehicle-to-vehicle or vehicle-to-infrastructure communication.

It is assumed that the multiple section information are determined in advance so that the inventive method may focus on determining which section or sections belong to which lane boundary to eventually identify all the sections that belong to one lane boundary. The one lane boundary is a specific or common lane boundary comprising at least two sections.

The method comprises determining an orientation information for each section information. The orientation information describes an orientation of the section relative to a reference line. Thus, it is determined how the individual sections are aligned with respect to the reference line. The reference line can be predetermined. Alternatively, the reference line may depend on the section information and/or another factor. The orientation information may be described by an angle between a central line of the respective section and the reference line. The central line is aligned in length direction of the section.

The method comprises if the orientation information of at least three adjacent sections coincide with a predetermined tolerance range verifying if these sections are all on one line. Therefore, a line determination algorithm is applied on the section information of the at least three adjacent sections. These adjacent sections are located nearby each other in one neighborhood or environment. If the sections have coinciding orientations and are all in one line, it may be assumed that they all belong to one lane boundary. However, if at least one of the sections is not in line with the other ones, it may be assumed that there is an offset between the sections so that it is unlikely that they belong to one lane boundary. Therefore, the method comprises identifying the sections as belonging to one lane boundary only if the at least three sections are all on one line. The predetermined tolerance range may be between 0 degree and 6.5 degrees. Other tolerance ranges are possible.

The line determination algorithm is, for example, a part of a software or a software. The details on multiple sections, hence the section information of the at least three adjacent sections with the coinciding orientations, are provided to the line determination algorithm. The line determination algorithm comprises at least one rule to determine if the considered adjacent sections are on one line or if they are on at least two different lines.

Furthermore, the method comprises providing a lane boundary information. The lane boundary information describes the one lane boundary that comprises the at least three adjacent sections with the coinciding orientations that are all on one line. Preferably, the lane boundary information comprises a list of all the sections that belong to the one lane boundary. In case of multiple lane boundaries, the method may provide multiple lane boundary information each describing all identified sections belonging to one specific lane boundary.

Advantages of the method are that it identifies all the sections that belong to one lane boundary. Besides, the method does not depend on a source of data that was used for determining the section information. It is thus independent of a sensor device that captures an image of the road with the lane boundary, wherein the image is used for determining the multiple section information. Moreover, it is not an object of the method to provide an interpretation of the lane because the method focuses on identifying all the sections that belong to the one lane boundary. This is particularly useful for providing a fast and reliable allocation of sections to lane boundaries.

The method is preferably a computer implemented method. A control device of the vehicle may perform the described steps of the method. Preferably, the control device performs as well steps of embodiments of the method, which are described in the following. An external device such as the backend, the server, and/or the cloud-server may perform the described steps of the method and/or the steps of the embodiments of the method.

An embodiment comprises more details on applying the line determination algorithm. Applying this algorithm comprises determining a first line. The first line connects a first center point of a first section of the at least three adjacent sections with a second center point of an adjacent second section of the at least three adjacent sections. Applying the line determination algorithm also comprises determining a second line connecting the second center point with a third center point of an adjacent third section of the at least three adjacent sections. The second section is the section located between the first section and the third section. Hence, two different lines are determined that connect the at least three considered adjacent sections.

Furthermore, applying the line determination algorithm comprises verifying if the first line and the second line form a straight line or if they are orientated at an angle to each other. If they are oriented an the angle, this angle is larger than 0 degrees or 180 degrees. If all three sections are in line, the first line and the second line form a prolongation of each other.

However, if a corner is formed at the second center point the two lines are orientated at an angle to each other and are hence spatially shifted relative to one another.

Applying the line determination algorithm comprises identifying the first section, the second section and the third section as belonging to the one lane boundary only if the first and the second line form the straight line. In case they are orientated at an angle to each other the three adjacent sections are not identified as belonging to one lane boundary. In this case it is determined that they belong to at least two separate lane boundaries. This explains in detail how to verify if the considered sections are all on one line.

Another embodiment comprises that the method comprises verifying if the at least three adjacent sections are located within a predetermined environment. The method comprises verifying if the orientation information coincide and/or applying the line determination algorithm only if this is the case meaning if the at least three adjacent sections are located within the predetermined environment. This means that it is first verified that the at least three adjacent sections are located close enough to each other to be located in one neighborhood before further steps of the method are performed. The predetermined environment is, for example, a region with a predetermined length and/or width. It may cover a predetermined part or percentage of the image that describes the multiple sections. For example, a distance between the at least three sections has to be smaller than a predetermined distance value so that these distances are considered when verifying the orientation information and/or verifying of the sections are all on one line. The predetermined distance value may be chosen under consideration of a size of the image that provides the section information and/or on a number of section information. This guarantees that no sections are considered that are located spatially so apart of each other that the method becomes inaccurate.

A further embodiment comprises that the line determination algorithm is applied on exactly three section information at a time. Therefore, the line determination algorithm has to be applied multiple times if there are more than three section information available. Since the sections are adjacent to each other there is little offset expected between them so that the described method can determine precisely if these three sections belong to the one line or not.

Preferably, after considering the first section, the second section and the third section the line determination algorithm is applied on the second section and third section and on a new first section replacing the previous first section. Afterwards, it may be applied on the third section, the new first section and a new second section that replaces the previous second section and so on. It is hence possible to apply the line determination algorithm on a specific section multiple times wherein each time at least one new other section information is considered. This results in a particularly robust identification of all the sections that belong to the one lane boundary.

According to a further embodiment the method comprises applying a lane boundary type determination algorithm on the multiple section information to determine if the section is a connected section or a non-connected section of a lane boundary. The orientation information is only determined for the non-connected sections. The so far described method is hence intended for non-connected sections such as dashed line markings and/or interrupted lane boundaries. If the multiple section information describe parts of a connected lane boundary, the above-described steps are preferably not performed. Thus, the above-described method may be referred to as a method for identifying non-connected sections belonging to one lane boundary of a lane on the road.

A preferred embodiment comprises further steps that are performed if at least two of the sections are connected sections. Then, the method comprises determining a starting point and an opposite ending point of the respective at least two connected sections. The starting point and the ending point are located at opposite ends of the respective connected section when viewed in length direction of the respective connected section. The starting point and the ending point are, for example, given as two coordinates.

The method comprises determining a distance between the ending point of a first connected section of the at least two connected sections and the starting point of a second connected section of the at least two connected sections. It is hence calculated how far away these two sections are from each other. The method also comprises verifying if the determined distance is smaller than a distance threshold. The distance threshold is, for example, between 0 millimeter on one hand and 1 millimeter, 2 millimeters, 3 millimeters, 5 millimeters, 1 centimeter, 2 centimeters, 3 centimeters, 5 centimeters, or in particular 1 decimeter on the other hand. Alternatively, the distance threshold may be given in a normalized unit. The distance threshold may be chosen in a value range so that the determined distance is only smaller than the distance threshold if the two connected sections are actually connected to each other.

The method comprises identifying the connected section as belonging to one connected lane boundary only if the determined distance is smaller than the distance threshold. Then, it comprises providing a connected lane boundary information that describes the one connected lane boundary. The connected lane boundary information comprises, for example, a list of all determined sections that belong to one connected lane boundary. Hence, the method is suitable for identifying both connected and non-connected lane boundaries.

Another preferred embodiment comprises that the method comprises verifying if the one lane boundary according to the lane boundary information and the one connected lane boundary according to the connected lane boundary information are connected to each other. The method comprises providing a composed lane boundary information that describes a composed boundary line that is composed of the one lane boundary and the one connected lane boundary only if the lane boundary and the connected lane boundary are connected to each other. It is therefore verified if there is any connection and hence a merge between the one lane boundary and the one connected lane boundary. It is, for example, detected if at some point a continuous line as lane boundary changes to a dashed line or vice versa. This is particularly relevant for an entrance and/or exit area of a construction site. Thus, the method is particularly versatile.

Furthermore, an embodiment comprises that the verification that the one lane boundary and the one connected lane boundary are connected to each other comprises determining an ending section of the one connected lane boundary that is located adjacent to an end of the one lane boundary. It also comprises determining an ending section orientation information describing the orientation of the ending section relative to the reference line. A length of the ending section may depend on a total length of the connected lane boundary. The ending section has, for example, a length that corresponds to one tenth of a length of the connected lane boundary. Alternatively, the length of the ending section may correspond to one tenth of a length of a section of the connected lane boundary. Alternative lengths are possible that are larger or smaller than the respective one tenth.

The method comprises comparing the determined ending section orientation information to the orientation information of two last sections at the end of the lane boundary. The two last sections are the two sections located at the end of the lane boundary wherein the two sections are located the closest to the ending section compared to other sections of the lane boundary. If the endings therefore, here in total three sections, the two last sections of the lane boundary as well as the ending section of the connected lane boundary are considered.

If the ending section orientation information and the orientation information of the last two sections coincide with the predetermined tolerance range, it is verified if the ending section and the last two sections are all on one line by applying the line determination algorithm. Only if these sections are all on one line the composed lane boundary information is provided. This means that the connection between the connected and the non-connected lane boundary is determined analogously to the above-described steps for determining the lane boundary information. However, the particularities of the connected lane boundary are taken into account.

Moreover, an embodiment comprises that the method is performed for each of the multiple section information. In particular, the method comprises creating a map of all identified lane boundaries, connected lane boundaries and/or composed lane boundaries. This means that it is possible to label all sections within, for example, an image according to the lane boundary they belong to and to a lane boundary type they belong to. The lane boundary type differentiates at least between a lane boundary, which is a non-connected lane boundary, a connected lane boundary and a composed lane boundary. Alternatively or additionally, the method comprises creating a list of all identified lane boundaries, connected lane boundaries and/or composed lane boundaries. The map and/or list may support further processing of the results of the method, for example, to identify the lane that is bound by at least one of the determined lane boundaries, connected lane boundaries and/or composed lane boundaries.

A further embodiment comprises that the method comprises applying a section detection algorithm on sensor data. A sensor device may capture the sensor data. The sensor data is hence captured by the sensor device. A section detection algorithm is applied on the sensor data to determine the multiple section information. This means that a preprocessing of sensor data may take place to determine the section information that are provided to perform the other steps of the method. The sensor data is, for example, image data. Preferably, the vehicle comprises the sensor device capturing the sensor data. In this case, the vehicle may detect the sections of lane boundaries that are located in its own environment, more precisely in a coverage area of its sensor device.

Alternatively or additionally, the sensor device is an external sensor device that is arranged outside the vehicle. This sensor device may be a component of another vehicle and/or a road surveillance device. In this case the section information and/or the sensor data captured by the external sensor device may be transmitted to the vehicle and received by the vehicle directly or via the external device. Alternatively or additionally, the external device receives the sensor data and/or the section information from the external sensor device and perform the further steps of the method.

The preprocessing of the sensor data meaning the section detection algorithm may be based on digital image processing and/or machine learning. The section detection algorithm is configured to classify objects in the sensor data. These objects are sections of lane boundaries. In particular, the section detection algorithm determines all connected and non-connected sections of lane boundaries described by the sensor data. Other markings on the road such as arrows, numbers, letters and/or markings for indicate a stop area on the road, for example, in front of a traffic light are identified as well so that they are excluded from the provided section information. The method thus comprises necessary preprocessing steps to determine the multiple section information.

Another embodiment comprises that the sensor data is camera data and/or LIDAR data. This means that the sensor device is preferably a camera and/or a LIDAR device. The camera may be a front camera and/or a surround view camera of the vehicle, the other vehicle and/or a road surveillance camera of the road surveillance device. Camera data and/or LIDAR data are particularly useful to detect and identify, for example, lane markings, curbs and/or other infrastructure components that may be used as lane boundaries. However, the method is not dependent on the type of sensor data. It is hence applicable for all types of possible sensor data that allow the identification of sections of lane boundaries. The method is hence easily applicable for different types of sensor data.

A further embodiment comprises that before determining the orientation information for the respective section information the method comprises normalizing the respective section information. The normalization, for example, comprises a transformation from absolute coordinates to scaled coordinates or normalized coordinates. This simplifies the calculations necessary when performing some steps of the method.

In more detail, the method may be based on the following assumptions and mathematical equations:

Guiding elements are basic elements of a stationary environment indicating lane boundaries, meaning guiding a drivable path. With E being a set of all elements constituting abstract representations of the stationary environment, and G being a subset of E containing only guiding elements, a guiding element $g \in G \subset E$ is defined as

$$g = \left\{ (\mathbf{p_s}, \mathbf{p_m}, \mathbf{p_e}, c, l) \; \middle| \; \begin{array}{l} \mathbf{p_s}, \mathbf{p_m}, \mathbf{p_e} \in \mathbb{R}^2, \\ c \in \{0, 1, \ldots, n\} \\ l \in \{-1, 0, 1, \ldots, m\} \end{array} \right\}, \quad (1)$$

with $p_{s,m,e}$ being the 2D coordinates for start, middle, and end point of the respective guiding element, c being one out of $n$ class labels, and I being one out of m boundary labels. Usually, class labels feature road markings and curbs in urban scenes, but they can also represent elements such as fences and reflector posts. Both sets E and G are either derived from HD maps or generated from vehicle sensors (sensor device).

In order to combine several guiding elements into a lane boundary independently of fitting geometrical models, similar properties must be searched for among guiding elements located close to each other, meaning local neighborhoods.

Local neighborhoods define a search area around the i-th guiding element $g_i$ to identify sets of elements that are geographically closest to that respective guiding element. Let $(a/w^2) + (b/h^2) = 1$ be an ellipse equation with a = (($x - p_x)cos\beta + (y - p_y)sin\beta)^2$, b = (($x - p_x)sin\beta - (y - p_y)cos\beta)^2$, width w and height $h$ with respect to an ellipse center $p_{i,m} \in g_i \in G,$ and its orientation $\beta$ as the angle between the axis of element $g_i$ and a Cartesian coordinate system axis. The local neighborhood $N_{G,w,h,\beta}(p_{i,m})$ with w, $h \in R{\geq}0$ around the i-th guiding element $g_i$ with middle point $\mathbf{p}_{i,m} \in \mathbb{R}^2$ is defined as

$$\mathcal{N}_{\mathcal{G},w,h,\beta}\left(\mathbf{p}_{i,\mathrm{m}}\right) = \left\{ g \in \mathcal{G} \;\middle|\; \frac{a}{w^2} + \frac{b}{h^2} \leq 1 \right\}. \qquad (2)$$

The local neighborhood is called elliptical if $w \neq h,$ and circular if $w = h.$ The choice of an elliptical neighborhood is preferable to a circular one since the orientation of a guiding element restricts the boundary search range to two possible growth directions (meaning directly before and after the element), which correspond more to an elongated tube.

Boundaries represent the left and right borders of a lane, respectively. In basic terms, a boundary is represented by a connected set of guiding elements that share similar properties in common local neighborhoods, for example, have the same orientation and lie in a common imaginary line with respect to some Cartesian coordinate system. A boundary $B_G$ is a set of multiple guiding elements $g$ that is defined by

$$\mathcal{B}_{\mathcal{G}} = \left\{ g_i, g_j \in \mathcal{G} \;\middle|\; \begin{matrix} \mathbf{p}_{i,\mathrm{m}} \in \mathcal{N}_{\mathcal{G},w,h,\beta}\left(\mathbf{p}_{j,\mathrm{m}}\right), \\ \mathbf{p}_{j,\mathrm{m}} \in \mathcal{N}_{\mathcal{G},w,h,\beta}\left(\mathbf{p}_{i,\mathrm{m}}\right), \\ d_b(\mathbf{p}(g_i), \mathbf{p}(g_j)) \leq \epsilon_b \end{matrix} \right\}, \qquad (3)$$

with $d_b\colon \mathbb{R}^2 \times \mathbb{R}^2 \to \mathbb{R}_{\geq 0}$ being some metric that assesses spatial relationships between guiding elements using their 2D information p, and $\varepsilon_b$ being a predefined metric threshold.

Lanes are a composition of two boundaries that have similar spatial relationships, for example, are parallel and have a valid distance to each other. Let $P_G$ be a set of boundaries $B_{G,i} \in P_G$ $(i, j \in \{1, ..., |P_G|\})$ and $d_l\colon \mathbb{R}^2 \times \mathbb{R}^2 \to \mathbb{R}_{\geq 0}$ be some metric that assesses spatial relationships between boundaries using the 2D information $p_{s,m,e}$ of their guiding elements $g$. A lane $L_{PG}$ is a set of exactly two connected boundaries $B_G$ that is defined by

$$\mathcal{L}_{\mathcal{P}_{\mathcal{G}}} = \left\{ \begin{matrix} \exists!^2 \; \mathcal{B}_{\mathcal{G},i}, \mathcal{B}_{\mathcal{G},j} \in \mathcal{P}_{\mathcal{G}} \\ \mid d_l(\mathbf{p}_{\mathrm{s,m,e}}(g_i), \mathbf{p}_{\mathrm{s,m,e}}(g_j)) \leq \epsilon_l \end{matrix} \right\}, \qquad (4)$$

with $\varepsilon_l$ being a predefined metric threshold.

According to the introduced definitions, the problem can be formulated as follows: The goal is to extract multiple guiding elements $g$ from G within a local neighborhood N , and to group them into individual boundaries $B_G$ in a first step, and to extract exactly two boundaries from a set of boundaries $P_G$ and group them to individual lanes $L_{PG}$ in a second step.

The methodology introduced in this article is described under the following assumptions:

(i) The guiding elements considered in this work are limited to solid and dashed road markings, as well as curbs, since these are the most common in road traffic.

(ii) Since a changing elevation profile of the road is negligible for the course of lanes, 2D coordinates of the guiding elements are used for any calculation.

(iii) The detection of guiding elements, for example, within camera images or point clouds, is out of scope. Such an input for the presented algorithm is simulated by generating deviating guiding elements from an existing HD map.

In the following, details regarding the first step boundary extraction are described, that takes the set of stationary environment elements E as input and outputs the set $P_{BG}$ of multiple boundaries $B_G$. The main idea of the boundary extraction method is to grow a line continuously, starting from a single guiding element, by adding neighboring elements that are direct predecessors or successors of the currently considered element or already grown boundary, respectively, based on their spatial properties. To this end, a distinction is made between connected and non-connected (but successive) guiding elements. For connected elements that are seamlessly applied to the road one after the other, for example, solid markings and curbs, boundary extraction is performed by searching for elements sharing similar start and end points, respectively. On the other hand, for non-connected elements that are successively applied to the road but with a gap, for example, dashed markings, boundary extraction is achieved by searching for neighboring elements with similar orientation, which are not only parallel but consecutive. The shape of the resulting growing lines can be arbitrary (meaning linear or polynomial), as long as directly neighboring elements do not significantly change their orientation to each other. Therefore, the required preprocessing steps are introduced first, followed by a detailed description of the SGL as well as the merging approach of boundaries from connected and non-connected elements.

The preprocessing step of the boundary extraction method includes the guiding elements selection and normalization. First, all guiding elements (see Equation 1) bundled in the set G are split off from the set of all elements E representing the stationary environment by filtering for element classes. Those guiding elements $g$ of the set $G$ are selected into the set of connected elements $G_{con}$, which are classified as solid marking (c = 0), or curb (c = 2)

$$g_{\mathrm{con}} \in \mathcal{G}_{\mathrm{con}} = \left\{ g \in \mathcal{G} \mid c \in \{0, 2\} \right\},$$

and those guiding elements $g$ of the set $G$ are selected into the set of non-connected elements $G_{ncon}$, which are classified as dashed marking ($c = 1$)

$$g_{\mathrm{ncon}} \in \mathcal{G}_{\mathrm{ncon}} = \left\{ g \in \mathcal{G} \mid c = 1 \right\}.$$

Second, the 2D coordinates of selected elements $g_{con}$, $g_{ncon}$ are normalized to the range [0, 1] using min-max normalization, which yields the normalized subsets $G'_{con} \subset G'$ and $G'_{ncon} \subset G'$ of guiding elements

$$\mathcal{G}' = \left\{ \left(\mathbf{p}'_{\mathrm{s,m,e}}, c\right) \middle| \begin{array}{l} p'_x = \dfrac{p_x - p_{x,\mathrm{min}}}{p_{x,\mathrm{max}} - p_{x,\mathrm{min}}}, \\[2mm] p'_y = \dfrac{p_y - p_{y,\mathrm{min}}}{p_{y,\mathrm{max}} - p_{y,\mathrm{min}}}, \\[2mm] \left(\mathbf{p}_{\mathrm{s,m,e}}, c\right) \in \mathcal{G} \end{array} \right\}.$$

The reason for the normalization is twofold: On the one hand, the normalization prevents numeric problems while dealing with very large numbers which could lead to falsified results in further analyzes. For HD map and sensor data, values of the $y$-coordinates are often larger than those of the x-coordinates. Therefore, on the other hand, normalizing the data prevents a single value from having more influence on the result in further computations.

The goal of the self-growing line (SGL) algorithm for connected elements such as solid road markings and curbs is to assign a boundary label to each guiding element. To this end, the approach refers to finding common end points of connected elements in $G'_{con}$, meaning the end of one element merges directly into the beginning of another element. Therefore, starting from a single element, intersections with other elements at the start and end points are searched for. If several elements have already been combined to form a boundary, then a search is made for further intersection points starting from the end points of the two outer elements. The rationale for this approach is that for both HD map elements and detections in sensor space, very long elements are subdivided into and represented by many smaller ones, thus, elements that share start or end points necessarily belong to a common boundary. This approach also does not erroneously classify overlapping elements to belong to a common boundary, since the intersection is neither the start nor the end point of an element.

To this end, two k-d trees are constructed for an efficient neighborhood search for start and end points of elements $g'_{con} \in G'_{con}$, respectively, seperately for every element class (meaning solid road markings and curbs). Using the k-d trees, distance matrices are calculated accordingly for the combinations start-start points, end-end points, and start-end points using the Euclidean distance

$$d_b(g'_i, g'_j) = \sqrt{(p_{x,j} - p_{x,i})^2 + (p_{y,j} - p_{y,i})^2}, \quad (5)$$

representing the metric from equation 3. For each element $g'_i \in G'_{con}$, it is verified if there is a neighboring element $g'_j \in G'_{con}$ with which start or end point is shared according to a distance threshold $\varepsilon_b$. The value $\varepsilon_b = 0.001$ is set, as this has been proven in practice. In case of a match in the end point search, meaning $d_b(g'_i, g'_j) \le \varepsilon_b$, both elements $g'_i, g'_j$ are assigned to the same boundary by assigning the same boundary label I to them. If both elements have no label yet, a new label will be introduced and assigned to them. In case one of the two elements has already been assigned a boundary label, the other matching element will be assigned this already existing boundary label. If both matched elements already have a different label, it means they already belong to two different boundaries. Then, one label of them will be deleted and the elements already assigned with the deleted label will be assigned the other label (this applies to all elements with the assigned deleted label, not only to the currently matched ones), meaning the two individual boundaries already found are merged. The more elements or already clustered boundaries are verified for common start and end points, the longer individual boundaries grow, or the more new boundaries are found, respectively. The algorithm terminates and outputs a set of found boundaries $B_{G'con}$ as soon as all elements have been assigned a label.

The SGL approach for non-connected elements such as dashed road markings also aims at assigning a boundary label to each element. Unlike connected elements, the SGL algorithm for non-connected elements cannot be based on searching for common end points, since non-connected elements are applied to the road with a gap. Instead, this approach is based on searching spatial predecessor and successor elements with similar spatial properties starting from a single element called growth element, which together can form an imaginary line, meaning a boundary. If several elements are already combined to a boundary, starting from the two elements at both ends of the boundary, further elements with similar spatial properties are searched for, so that the boundary can grow further at both ends. If a currently considered boundary stops growing at both ends, the search is started again from a not yet considered element. The algorithm terminates as soon as all elements have been assigned a boundary label.

For this purpose, two spatial properties between neighboring guiding elements are determined: orientation and relative position to each other in a Cartesian space. To determine the orientation of two elements to each other, the so-called element azimuths $\alpha_i$, $\alpha_j$ are calculated, which indicate the angle between the respective element and a reference line $s_{ref}$. If these angles are similar with respect to some angular threshold, it can be concluded that the elements have the same orientation. However, this alone is not sufficient to determine whether they also lie on a common boundary, because while they can have the same orientation and lie on a common imaginary line, they can also have the same orientation and still only be parallel, Therefore, on the other hand, their relative position in a Cartesian space with respect to each other (meaning are they next to each other or behind each other) is determined by a second spatial relation called coordinate azimuth $\alpha_{ij}$. The coordinate azimuth specifies the angle between an imaginary straight line between the centers of the two elements and the reference line. Only if both are true, the element azimuths are similar and the coordinate azimuth is similar to the element azimuths with respect to some angular threshold, it is assumed that the considered elements belong to the same boundary. This approach can also be used to extract curved boundaries, since regardless of the curvature, directly adjacent and successive guiding elements do not significantly change the introduced spatial properties to each other (threshold value can be reasonably chosen). To this end, a recursive approach is introduced, which is divided into the four steps of parameter definition, growth element feature computation, spatial relationship computation, and boundary growing verification.

First, the parameter definition step determines the parameters $\varepsilon_b$, $r_{search}$, $s_{ref}$, I and *grown*. These parameters are essential for determining the tolerance in orientation, the search range for neighboring elements, the reference for angular computation, and the growing status of the boundary, and are used in subsequent steps of the processing. The parameter $\varepsilon_b$ represents the angular threshold between two guiding elements, which still allows to assign them to a common boundary, which is set to $\varepsilon_b = 6.5$ degrees as this has been proven in practice. In order to ensure that at least one potential predecessor and successor, respectively, is contained in the local neighborhood, meaning the search range, the multiplier is set to $r_{search} = 6$. Furthermore, to determine the orientation and position of guiding elements in a common neighborhood, a reference line $s_{ref}$ is established. The last parameter introduced is the Boolean value grown, which is used to express whether or not a potential boundary is extended in the current recursion, meaning whether new guiding elements have caused the boundary to grow. Initially, grown is set to false since no boundary exists yet.

After defining the parameters, the steps growth element feature computation, spatial relationship computation, and boundary growing verification are performed recursively.

The second step a growth element feature computation outputs the currently considered growth element $g'_j$ representing the starting point for potential boundary growth, the element azimuth $\alpha_i$, the label $l$ currently to be assigned, the empty counter set E and the local neighborhood $N_{G'ncon}(p_i)$. The counter set E is used to store the elements being on a common boundary in each recursion, allowing to verify whether the boundary has grown further. In each recursion it is first verified whether *grown = true* or *grown = false* holds. If *grown = false* holds (which is the case for the very first recursion, and whenever a boundary has just finished growing and the search for a new boundary is to begin), it is further verified if $\exists g' \in G'_{ncon} : g'.l = -1$ holds, which means there exists at least one element that has not yet been assigned a label. In case no such element exists anymore, the algorithm terminates and outputs $G'_{ncon}$, otherwise a label is chosen from the set of natural numbers that is not already used for a boundary assignment: $l \varepsilon N \setminus \{l_1, l_2, ..., l_{m-1}\}$. Furthermore, an element from the set $G'_{ncon}$ for which no boundary label has yet been assigned is selected as the growth element: $g'_i = g' \mid (g' \varepsilon G'_{ncon} \wedge g'.l = -1)$. If *grown = true* holds (which is the case when a boundary has not yet finished growing), the label and growth element are already known from the previous recursion. After the current growth element and label are identified, both the growth element azimuth and the local neighborhood around the growth element are determined for the current recursion.

The growth element azimuth $\alpha_i$ is defined as

$$\cos(\alpha_i) = \frac{\left|\vec{g'_i} \cdot \vec{s_{\mathrm{ref}}}\right|}{\left|\vec{g'_i}\right| \cdot \left|\vec{s_{\mathrm{ref}}}\right|},$$

With $\vec{g'_i}$ and $\vec{s_{\mathrm{ref}}}$ being the direction vectors of the growth element and the reference line, respectively. The local neighborhood $N_{G'ncon}(p_i)$ around the growth element $g_i$ is computed according to Equation 2, with width w and height $h$ of the ellipse defined as

$$w = \sqrt{(p_{x,e} - p_{x,s})^2 + (p_{y,e} - p_{y,s})^2} \cdot r_{\mathrm{search}}, \quad h = w \cdot 0.1,$$

which corresponds to $r_{\mathrm{search}}$-times the length of the element for the width of the ellipse, and to a ratio of 1 : 10 for the height of the ellipse. Practical experiments have shown that these parameters best describe the search range for a self-growing line, since this creates a neighborhood of the shape of an elongated tube. The orientation of the neighborhood ellipse corresponds to that of the considered growth element, so that due to the elongated neighborhood around it, the search is performed only in the area where potential further boundary candidates are to be expected.

Third, the spatial relationship computation-step recursively selects a neighbor element $g'_j \varepsilon N_{G'ncon}(p_i)$ which has not been assigned the current label yet, and verifies whether $g'_j$ lies on a common boundary together with the growth element $g'_i$, until there is no unselected element in $N_{G'ncon}(p_i)$, and outputs the modified sets $G'_{ncon}$ (label assignments for elements $g'_j$ ) and E. Therefore, both spatial relationships orientation and relative position are represented by the element azimuths, the coordinate azimuth, and their difference angles. The element azimuth $\alpha_j$ is computed as

$$\cos(\alpha_j) = \frac{\left|\vec{g'_j} \cdot \vec{s_{\mathrm{ref}}}\right|}{\left|\vec{g'_j}\right| \cdot \left|\vec{s_{\mathrm{ref}}}\right|},$$

with $\vec{g'_j}$ being the direction vector of the neighbor marking, and the coordinate azimuth a;, is computed as

$$\cos(\alpha_{ij}) = \frac{\left|\vec{g'_i g'_j} \cdot \vec{s_{\mathrm{ref}}}\right|}{\left|\vec{g'_i g'_j}\right| \cdot \left|\vec{s_{\mathrm{ref}}}\right|},$$

with $\overrightarrow{g'_i g'_j}$ being the direction vector of the connecting line from $p_m(g'_i)$ to $p_m(g'_j)$. In order to decide whether $g'_j$ grows a common boundary with $g'_i$, the two difference angles

$$d_{b1}(g'_i, g'_j) = |\alpha_i - \alpha_j|, \quad d_{b2}(g'_i, g'_j) = |\alpha_i - \alpha_{ij}|,$$

are computed, which represent the metric from Equation 3. The boundary label $l$ is assigned to $g'_j$, and $g'_j$ is appended to the counter set $E$ if $d_{b1}, d_{b2} \leq \varepsilon_b$ holds.

The fourth step *boundary growing verification* assigns a label to the current growth element $g'_i$, and verifies whether the currently considered boundary has grown in this recursion. Based on this information, the new growth marking is determined for the next recursion. To this end, the current label $l$ is assigned to $g'_i$ if $\exists g'_j : g'_j.l = l$ holds (meaning there is at least one neighbor element $g'_j$ which is assigned l), otherwise 0 (meaning noise since $g'_i$ is neither the start of a new boundary nor belongs to one). If the latter applies, grown = false is set and output along with the modified set $G'_{\text{ncon}}$ (label assignment for $g'_i$). If the former applies, the current growth element is definitely part of a (possibly already existing) boundary, and E is used to verify whether this has grown further at one end or whether growth has stagnated here. To keep track of this across all recursions, the two helper elements $g_{\text{end}}$ and $g_{\text{dist}}$ are introduced, representing an already confirmed end element of the current boundary and the furthest element to the next growth element to be defined, respectively. Four cases are distinguished:

(1) The boundary has not grown ($E = \emptyset$) and there is no end element yet, which means $g_{\text{end}} = g'_i$ and $g_{\text{dist}} = g'_i$ are set and the boundary can grow further at the other end.
(2) The boundary has not grown ($E = \emptyset$) and there is already an end element, which means the boundary growth finished and $g_{\text{end}} = \emptyset$ is set for the next recursion.
(3) The boundary has grown ($E \neq \emptyset$) and there is no end element yet, which means it can grow further at both ends and $g_{\text{dist}} = g'_i$ is set.
(4) The boundary has grown ($E \neq \emptyset$) and there is already an end element, which means it can grow further at one end and $g_{\text{dist}} = g_{\text{end}}$ is set.

For cases (1), (3), and (4), *grown = true* is set and output along with $G'_{\text{ncon}}$, $g_{\text{end}}$, and the new growth element as being (one) current end element of the boundary, which is defined by

$$g'_i = \arg\max_j \{d(g'_j, g_{\text{dist}}) \mid g'_j \in G'_{\text{ncon}}, g'_j.l = l\},$$

with $d(g'_j, g_{\text{dist}})$ being the Euclidean distance between all elements $g'_j$ already assigned the current label $l$ and $g_{\text{dist}}$. For case (2), *grown = false* is set and output along with $G'_{\text{ncon}}$ and $g_{\text{end}}$. The outputs serve as new input for the next recursion starting with the second step. With this approach, geometry and segment independence is achieved, since it scales to all segments of a road by refraining from fitting models to the elements. Furthermore, multiple lanes can be covered as long as enough detections of guiding elements are available.

From the input sets $G'_{\text{con}}$, $G'_{\text{ncon}}$ with label assignments, one boundary $B_{Gcon}$ or $B_{Gncon}$, respectively, can be derived per label. The merging step aims to combine boundaries of connected and non-connected elements and output the final set *PBG* of all boundaries, since in reality, for example, boundaries from dashed marking elements can merge into boundaries from solid marking elements and vice versa. When considering boundaries for merging, the same properties must be considered as when combining single guiding elements to a boundary: distances, orientation, and relative position to each other. Unlike single guiding elements, the whole elements (meaning the whole boundaries) cannot be considered, since the spatial properties can change significantly over the boundary length. For example, considering two strongly curved boundaries (for example in a traffic circle or curve), the computation of their orientation and relative position using the start and end points of the boundaries would not provide reasonable results. Instead, it is sufficient to verify whether smaller regions of the boundaries close to the potential merging point share similar spatial properties. To this end, boundaries that are close to each other are identified, and then those with similar spatial properties at the boundary end regions are merged.

In order to do so, only pairs of boundaries whose end point distance $d(p_{\text{end}}(B_1), p_{\text{end}}(B_2,)) \leq 3.5$ m are considered, which is calculated by the Euclidean distance defined in Eq. 5. These closely spaced boundaries are merged according to the SGL algorithm introduced above using their boundary end regions as guiding elements. For boundaries from non-connected elements $B_{Gncon}$, the two end elements are used as boundary end regions. For boundaries from connected

elements $B_{G\text{con}}$, two small end elements are "truncated" at its ends, representing the boundary end regions. Therefore, the cut-off points are selected $|p_{start}(B) - p_{end}(B)| \times 1/10$ away from both end points.

A further aspect of the invention relates to a control device for a vehicle and/or an external control device to perform the method. The control device and/or the external control device perform the method.

The control device and/or the external control device are computing units. The control device and/or the external control device may in particular be understood as data processing devices, which comprise processing circuitry. The control device and/or the external control device can therefore in particular process data to perform computing operations. This may also include operations to perform indexed accesses to a data structure, for example a look-up table, LUT.

In particular, the control device and/or the external control device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The control device and/or the external control device may also include one or more processors, for example one or more microprocessors, one or more central processing units, CPU, one or more graphics processing units, GPU, and/or one or more signal processors, in particular one or more digital signal processors, DSP. The control unit may also include a physical or a virtual cluster of computers or other of said units.

In various embodiments, the control device and/or the external control device include one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Another aspect of the invention relates to a vehicle with a control device to perform the above described method. The vehicle is preferably a motor vehicle. The vehicle is, for example, a passenger car, a truck, a bus, a motorcycle, and/or a moped. The motor vehicle comprises a control unit to perform the method.

Another aspect of the invention relates to a computer program product. When the program is executed by a computer such as the control device and/or the external control device the instructions cause the computer to carry out the above-described method. The computer program product is a computer program.

Furthermore, the invention may comprise a computer-readable storage medium comprising instructions which, when executed by a computer cause the computer to carry out the above-described method.

For use cases or use situations which may arise and which are not explicitly described here an error message and/or a prompt for user feedback may be output and/or a default setting and/or a predetermined initial state may be set.

The invention also comprises further embodiments of the control device, the external control device, the vehicle and/or the computer program product which have features as already described in connection with the further embodiments of the method. For this reason, the corresponding further embodiments are not described again.

The invention also comprises the combinations of the features of the described embodiments.

Examples of embodiments of the invention are described below. Thereby shows:

Fig. 1 a schematic representation of a vehicle;

Fig. 2 a schematic representation of lane boundaries of multiple lanes on a road;

Fig. 3 a schematic representation of steps of a method for identifying sections belonging to one non-connected lane boundary;

Fig. 4 a schematic representation of steps of a method for identifying sections belonging to one connected lane boundary; and

Fig. 5 a schematic representation of steps of a method for identifying one composed lane boundary.

The examples explained below are preferred embodiments of the invention. In the examples, the components described each represent individual features of the invention which are to be considered independently of one another and which each also further the invention independently of one another and are thus also to be regarded as a component of the invention individually or in a combination other than that shown. Furthermore, the described embodiments can also be complemented by further features that are described above.

In the figures, functionally identical elements are provided with the same reference signs.

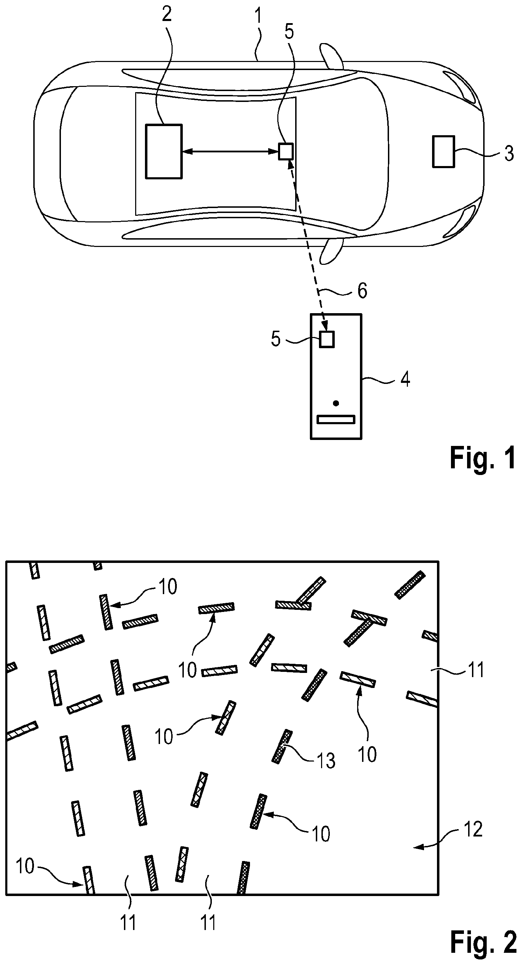

Fig. 1 shows a vehicle 1 that comprises a control device 2. The control device 2 is, for example, an electronic control unit (ECU) of the vehicle. The vehicle 1 may provide a sensor device 3, such as a camera and/or a LIDAR device. The sensor device 3 is configured to capture an environment of the vehicle 1.

Fig. 1 shows an external device 4 such as a server, backend or cloud-server. The external device 4 may alternatively be another vehicle 1. Via a communication interface 5 of the vehicle 1 and the external device 4 the vehicle 1 and the external device 4 may exchange data. Therefore, there may be a communication connection 6 between the communication interfaces 5. The communication connection 6 may be based on vehicle-to-vehicle or vehicle-to-infrastructure communication.

The control device 2 of the vehicle 1 and/or the external device 4 may perform the following method. Data required for this may be received by the control device 2 or the external device 4, respectively. This data is hence provided to the control device 2 or the external device 4, respectively.

Fig. 2 shows an example of an environment of the vehicle 1. The environment may be a construction site. The environment comprises multiple lane boundaries 10 of lanes 11 on a road 12. Here, three different lanes 11 with six individual lane boundaries 10 are sketched. The lane boundaries 10 are all dashed line markings. They are hence non-connected lane boundaries. Other arrangements, numbers and/or types of lane boundaries 10 are possible. Each lane boundary 10 comprises multiple sections 13.

The method comprises identifying all sections 13 that belong to one specific lane boundary 10. As a result, here six different sets of sections 13 are expected to be identified, wherein each set pf section 13 comprises the sections 13 of one of the six lane boundaries 10.

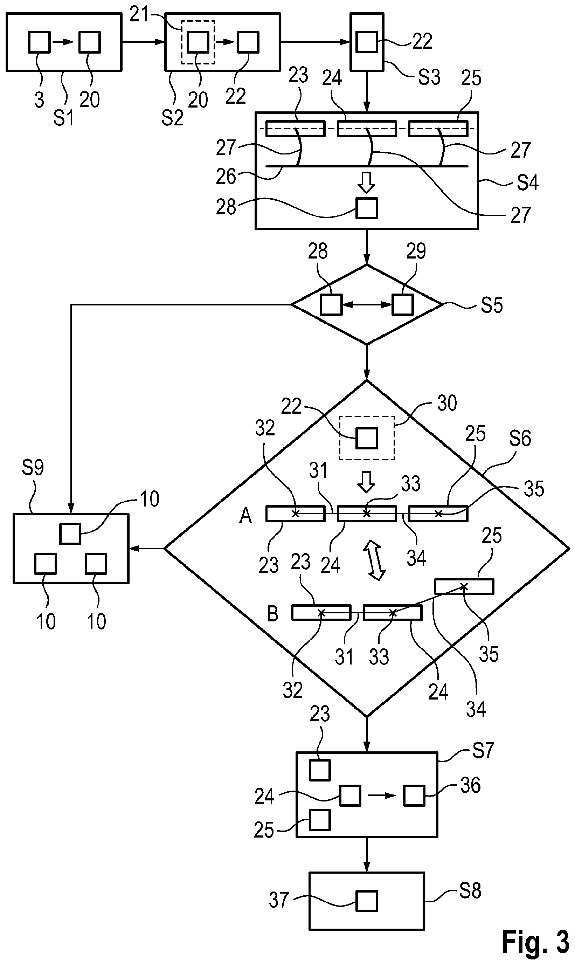

Fig. 3 shows steps of a method for identifying sections 13 belonging to one lane boundary 10 of a lane 11 on the road 12. In a first step S1 the sensor device 3 may capture sensor data 20. The sensor data 20 may describe the environment sketched in Fig. 2. The sensor device 3 may be part of the vehicle 1 and/or an external sensor device 3 that provides data to the external device 4 and/or the vehicle 1.

Preferably, a step S2 as well as following steps are performed by the control device 2 of the vehicle 1 and/or the external device 4.

In step S2, a section detection algorithm 21 may be applied on the sensor data 20 to determine multiple section information 22. Each section information 22 describes one of the sections 13 of one of the lane boundaries 10 on the road 12. This section detection algorithm 21 may be based on digital image processing and/or machine learning. It is assumed that it is possible for the section detection algorithm 21 to identify all the sections 13 described by the sensor data 20.

In a step S3 the method comprises providing the multiple section information 22 which each describe a section 13 of a lane boundary 10 of a lane 11 on the road 12. This means that the control device 2 and/or the external device 4 has access to the multiple section information 22.

In a step S4, the method comprises determining an orientation information 28 for each section information 22. The orientation information 28 describes an orientation of the section 13 relative to a reference line 26. This is here sketched for a first section 23, a second section 24 and a third section 25. These are three adjacent sections 13 that are hence located next to each other. For example, an angle 27 between a central line extending in length direction of each of these sections 23, 24, 25 and the reference line 26 is considered as orientation of the respective section 23, 24, 25. Therefore, the three sketched angles 27 may be described by the orientation information 28.

In a step S5, it is verified if the orientation information 28 of the at least three adjacent sections 23, 24, 25 coincide within a predetermined tolerance range 29. The tolerance range 29 may be between larger than 0 degree and 6.5 degrees. It may be any range between larger than 0 degrees and 1 degree, 2 degrees, 3 degrees, 4 degrees, 5 degrees, 6 degrees, 7 degrees, 10 degrees, 15 degrees, 20 degrees, or in particular 30 degrees.

If it is determined that the orientation information 28 coincide within the predetermined tolerance range 29, a step S6 is performed that comprises verifying if the sections 23, 24, 25 are all on one line. Therefore, a line determination algorithm 30 is applied on the section information 22 of these three sections 23, 24, 25.

In particular, the step S6 may comprise determining a first line 31 that connects a first center point 32 of the first section 23 with a second center point 33 of the adjacent second section 24. It also comprises determining a second line 34 that connects the second center point 33 with a third center point 35 of the adjacent third section 25. It may then be verified if the first line 31 and the second line 34 form a straight line, as it is sketched here in a scenario A, or if they are orientated at an angle 27 to each other, as it is sketched in a scenario B. Only if the first line 31 and the second line 34 form the straight line, as it is the case for scenario A, the first section 23, the second section 24 and the third section 25 may be identified as belonging to one lane boundary 36. The one lane boundary 36 is a non-connected lane boundary 10. In case of scenario B one of the sections 23, 24, 25 is out of line. Therefore, these three sections 23, 24, 25 do not form one lane boundary 36 due to the observed offset between the first section 23 and the second section 24 on one hand and the third section 25 on the other hand.

A step S7 is only performed if the sections 23, 24, 25 are all on one line. This step comprises that the sections 23, 24, 25 are identified as belonging to the one lane boundary 36. Afterwards, in a step S8, the method comprises providing a lane boundary information 37 that describes the one lane boundary 36.

However, if the step S6 results in identifying the sections 23, 24, 25 as not being in one line, the three sections 23, 24, 25 may all be assigned to individual lane boundaries 10 and not to the one lane boundary 36 in a step S9. Step S9 may as well take place if the orientation verification in step S5 results in the observation that the orientation information 28 of the adjacent sections 23, 24, 25 do not coincide within the predetermined tolerance range 29.

Before step S4 and/or step S6, the method may comprise verifying if the sections 23, 24, 25 are all located within a predetermined environment. This environment may be alternatively referred to as a neighborhood.

The line determination algorithm 30 is preferably applied on exactly three adjacent sections 23, 24, 25 and hence on exactly three section information 22 at a time. Preferably, this is repeated until all sections 13 have been considered, for example, all the sections 13 sketched in Fig. 2. Here, six different lane boundary information 37 would be determined because of the six sketched lane boundaries 10 in Fig. 2.

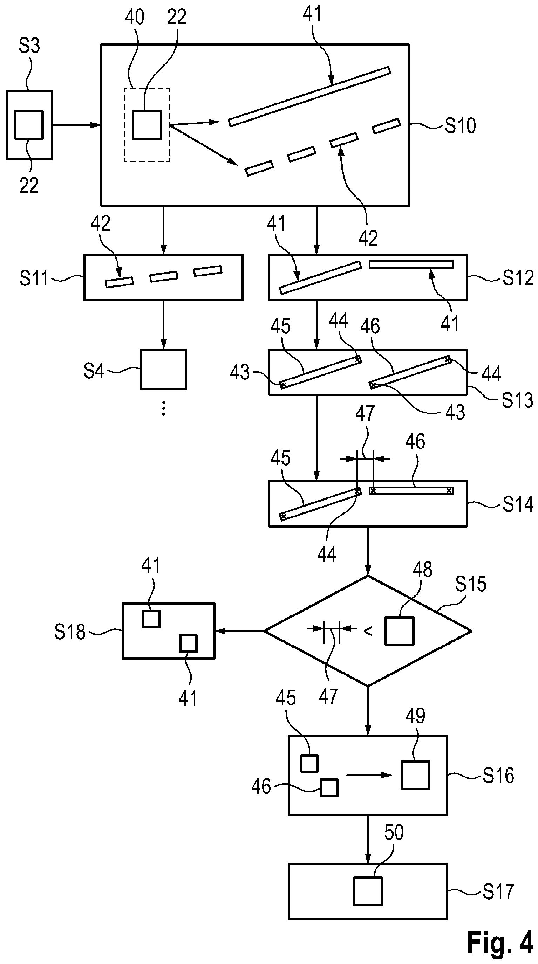

Fig. 4 shows possible further steps that may take place after step S3 meaning once the multiple section information 22 has been provided. In a step S10, the method may comprise applying a lane boundary type determination algorithm 40 on the multiple section information 22 to determine if the respective section 13 is a connected section 41 or a non-connected section 42 of a lane boundary 10. It is hereby assumed, that the line boundary type determination algorithm 40 may be a known algorithm that may identify if only a part of a connected lane boundary 49 has been detected as the respective section 13 or if the respective section 13 is part of a non-connected lane boundary (one lane boundary 36).

The steps S4 and/or S6 and the respective following steps until S8 or S9 are only performed for the sections 13 that are considered non-connected sections 42. In a step S11, all non-connected sections 42 are selected. Afterwards the steps S4 to S8 or S9 may follow.

In a step S12, at least two connected sections 41 may be chosen as sections 13 for the following steps. In a step S13, a starting point 43 and an opposite ending point 44 of each of the at least two connected sections 41 are determined. Here this is sketched for a first connected section 45 and a second connected section 46 of the at least two connected sections 41. In a step S14, the method may comprise determining a distance 47 between the ending point 44 of the first connected section 45 and the starting point 43 of the second connected section 46. A step S15 may comprise verifying if the determined distance 47 is smaller than a distance threshold 48. Only if this is the case, a step S16 may comprise identifying the two connected sections 45, 46 as belonging to one connected lane boundary 49. A step S17 may comprise providing a connected lane boundary information 50 that describes the one connected lane boundary 49.

If the verification in step S15 results in the observation that the determined distance 47 is greater than or equal the distance threshold 48 a step S18 may take place in which the two connected sections 41 are each identified as individual connected lane boundaries 10 and/or as connected sections 41.

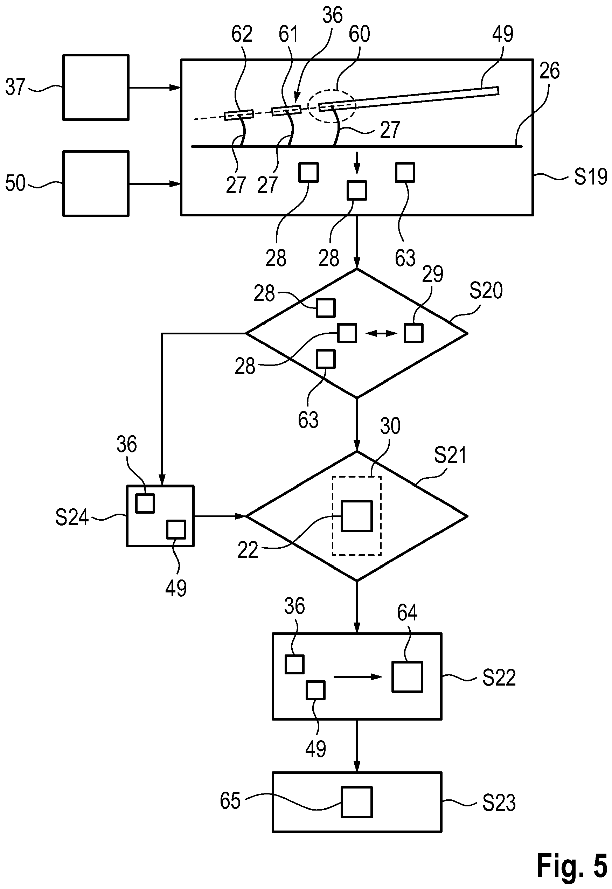

Fig. 5 shows further possible steps. They comprise verifying it the one lane boundary 36 according to the lane boundary information 37 is connected to the one connected lane boundary 49 according to the connected lane boundary information 50. Therefore, a step S19 may comprise determining an ending section 60 of the one connected lane boundary 49 that is located adjacent to an end of the one lane boundary 36 which is the non-connected lane boundary. For the ending section 60 an ending section orientation information 63 may be determined that describes the orientation of the ending section 60 relative to the reference line 26.

Besides, the orientation information 28 of two last sections 61, 62 at the end of the lane boundary 36 are considered. These orientation information 28 and the ending section orientation information 63 may be compared to one another. Hence, three angles 27 are determined and compared to each other. In a step S20, it may be verified if the ending section orientation information 63 and the orientation information 28 of the two last sections 61, 62 coincide within the predetermined tolerance range 29. If this is the case, the method may comprise a step S21, that comprises verifying that the ending section 60 and the two last sections 61, 62 are all on one line. Therefore, the line determination algorithm 30 may be applied on the respective section information 22 for the ending section 60 and the two last sections 61, 62. Only if this is the case, meaning that only if they are all in one line, a step S22 may comprise identifying that the one lane boundary 36 and the one connected lane boundary 49 form one composed lane boundary 64. A step S23 then may comprise providing a composed lane boundary information 65 that describes the one composed lane boundary 64.

If the orientation information 28 and the ending section orientation information 63 do not coincide within the predetermined tolerance range 29 and/or if they are not in one line, a step S24 may comprise identifying the lane boundary 36 and the connected lane boundary 49 as individual lane boundaries 10 and hence not as the one composed lane boundary 64.

Preferably, the methods described in Fig. 3, 4 and 5 are applied as often as necessary until every section information 22 of the image, which is here the image shown in Fig. 2, is analyzed. It is possible to create a map and/or a list of all identified lane boundaries 36, connected lane boundaries 49 and/or composed lane boundaries 64.

Preferably, before determining the orientation information 28 meaning even before step S4 or alternatively S13 a normalization may be performed. Then the section information 22 may be described in a normalized way.

In other words, first all elements and hence sections 13 that are of interest and which are either connected sections 41 or not-connected sections 42 are identified and then normalized. Afterwards, depending on whether the focus is on the non-connected sections 42 or on the connected sections 41, the steps of Fig. 3 and/or Fig. 4 are performed, respectively. Afterwards, the gained results may be merged by looking at possible composed lane boundaries 64 according to the steps of Fig. 5. As a result, for each section 13 it is provided what kind of lane boundary 10 it belongs to (connected, non-connected or composed) and/or the other sections 13 that belong to the same lane boundary 10.

The method may support automated processing for modelling of lane boundaries 10 which may be used to determine lanes 11 of roads 12. The method is not data-specific. The method may be performed offline or in real-time. The method considers multiple spatial properties such as neighbor marking azimuth, coordinate azimuth and/or different angles. Moreover, a reliable determination of a start and an end of a lane boundary 10 is achieved.

List of reference signs

| | |
|---|---|
| 1 | vehicle |
| 2 | control device |
| 3 | sensor device |
| 4 | external device |
| 5 | communication interface |
| 6 | communication connection |
| 10 | lane boundary |
| 11 | lane |
| 12 | road |
| 13 | section |
| 20 | sensor data |
| 21 | section detection algorithm |
| 22 | section information |
| 23 | first section |
| 24 | second section |
| 25 | third section |
| 26 | reference line |
| 27 | angle |
| 28 | orientation information |
| 29 | tolerance range |
| 30 | line determination algorithm |
| 31 | first line |
| 32 | first center point |
| 33 | second center point |
| 34 | second line |
| 35 | third center point |
| 36 | one lane boundary |
| 37 | lane boundary information |
| 40 | lane boundary type determination algorithm |
| 41 | connected section |
| 42 | non-connected section |
| 43 | starting point |
| 44 | ending point |
| 45 | first connected section |
| 46 | second connected section |
| 47 | distance |
| 48 | distance threshold |
| 49 | one connected lane boundary |
| 50 | connected lane boundary information |
| 60 | ending section |
| 61 | last section |
| 62 | last section |
| 63 | ending section orientation information |
| 64 | one composed lane boundary |

65          composed lane boundary information
S1-S24    steps

**Claims**

1.  Method for identifying sections belonging to one lane boundary (10) of a lane (11) on a road (12) comprising:

    - providing (S3) multiple section information (22) each describing a section (13) of a lane boundary (10) on the road (12);
    - for each section information (22) determining (S4) an orientation information (28) describing an orientation of the section (13) relative to a reference line (26);
    - if the orientation information (28) of at least three adjacent sections (23, 24, 25) coincide within a predetermined tolerance range (29), verifying (S6) if these sections (23, 24, 25) are all on one line by applying a line determination algorithm (30) on the section information (22) of these sections (23, 24, 25);
    - only if the sections (23, 24, 25) are all on one line, identifying (S7) the sections (23, 24, 25) as belonging to one lane boundary (36);
    - providing (S8) a lane boundary information (37) that describes the one lane boundary (36).

2.  Method according to claim 1, wherein applying the line determination algorithm (30) comprises

    - determining a first line (31) connecting a first center point (32) of a first section (23) of the at least three adjacent sections (23, 24, 25) with a second center point (33) of an adjacent second section (24) of the at least three adjacent sections (23, 24, 25);
    - determining a second line (34) connecting the second center point (33) with a third center point (35) of an adjacent third section (25) of the at least three adjacent sections (23, 24, 25);
    - verifying if the first line (31) and the second line (34) form a straight line or if they are oriented at an angle to each other; and
    - only if the first line (31) and the second line (34) form the straight line, identifying the first section (23), the second section (24), and the third section (25) as belonging to the one lane boundary (36).

3.  Method according to claim 2, wherein the method comprises verifying if the at least three adjacent sections (23, 24, 25) are located within a predetermined environment, and only if this is the case the method comprises verifying if the orientation information (28) coincide and/or applying the line determination algorithm (30).

4.  Method according to claim 2 or 3, wherein the line determination algorithm (30) is applied on exactly three section information (23, 24, 25) at a time.

5.  Method according to any one of the preceding claims, wherein the method comprises applying a lane boundary type determination algorithm (40) on the multiple section information (22) to determine if the section (13) is a connected section (41) or a non-connected section (42) of a lane boundary (10), wherein the orientation information (28) is only determined for the non-connected sections (41).

6.  Method according to claim 5, wherein if at least two of the sections (13) are connected sections (42) the method comprises:

    - determining (S13) a starting point (43) and an opposite ending point (44) of the respective at least two connected sections (45, 46);
    - determining (S14) a distance (47) between the ending point (44) of a first connected section (45) of the at least two connected sections (45, 46) and the starting point (43) of a second connected section (46) of the at least two connected sections (45, 46);
    - verifying (S15) if the determined distance (47) is smaller than a distance threshold (48);
    - only if this is the case identifying (S16) these connected sections (45, 46) as belonging to one connected lane boundary (49); and
    - providing (S17) a connected lane boundary information (50) that describes the one connected lane boundary (49).

7.  Method according to claim 5 and 6, wherein the method comprises verifying if the one lane boundary (36) according to the lane boundary information (37) and the one connected lane boundary (49) according to the connected lane boundary information (50) are connected to each other, wherein only if they are connected to each other the method comprises providing a composed lane boundary information (65) that describes a composed lane boundary (64) that is composed of the one lane boundary (36) and the one connected lane boundary (49).

8. Method according to claim 7, wherein the verification that the one lane boundary (36) and the one connected lane boundary (49) are connected to each other comprises:

    - determining (S19) an ending section (60) of the one connected lane boundary (49) that is located adjacent to an end of the one lane boundary (36);
    - determining an ending section orientation information (63) describing the orientation of the ending section (60) relative to the reference line (26);
    - comparing (S20) the determined ending section orientation information (63) to the orientation information (28) of two last sections (61, 62) at the end of the one lane boundary (36);
    - if the ending section orientation information (63) and the orientation information (28) of the two last sections (61, 62) coincide within the predetermined tolerance range (29), verifying (S21) if the ending section (60) and the two last sections (61, 62) are all on one line by applying the line determination algorithm (30);
    - only if the sections (60, 61, 62) are all on one line, providing (S23) the composed lane boundary information (65).

9. Method according to any one of claims 1 to 5, claim 6, and any one of claims 7 and 8, wherein the method is performed for each of the multiple section information (22) and comprises in particular creating a map and/or list of all identified lane boundaries (36), connected lane boundaries (49) and/or composed lane boundaries (64).

10. Method according to any one of the preceding claims, wherein the method comprises applying (S2) a section detection algorithm (21) on sensor data (20) captured by a sensor device (3) to determine the multiple section information (22).

11. Method according to claim 10, wherein the sensor data (20) is camera data and/or LIDAR data.

12. Method according to claim 10 or 11, wherein before determining the orientation information (28) for the respective section information (22) the method comprises normalizing the respective section information (22).

13. Control device or external control device to perform a method according to any one of the preceding claims.

14. Vehicle with a control device according to claim 13.

15. Computer program product comprising instructions which, when the program is executed by a computer, cause the computer to carry out the steps of a method according to any one of claims 1 to 12.

Fig. 1

Fig. 2

Fig. 3

**Fig. 4**

Fig. 5

Europäisches
Patentamt

European
Patent Office

Office européen
des brevets

# EUROPEAN SEARCH REPORT

Application Number

EP 23 17 8560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/251372 A1 (DWIVEDI MANOJ [IN] ET AL) 15 August 2019 (2019-08-15) * abstract; figures 6a-6c * * paragraph [0079] * * paragraph [0130] - paragraph [0138] * | 1-15 | INV. G06V20/56 G06V10/44 |
| X | CN 113 807 193 A (WUHAN ZHONGHAITING DATA TECH CO LTD) 17 December 2021 (2021-12-17) * paragraph [0020]; figure 2b * | 1,13-15 | |
| A | WO 2020/192105 A1 (MOMEMTA SUZHOU TECH CO LTD [CN]; BEIJING CHUSUDU TECH CO LTD [CN]) 1 October 2020 (2020-10-01) * the whole document * | 1-15 | |
| A | CN 107 679 520 A (UNIV HUNAN) 9 February 2018 (2018-02-09) * the whole document * | 1-15 | |
| A | CN 109 583 365 B (CHANGAN UNIV) 26 July 2022 (2022-07-26) * the whole document * | 1-15 | TECHNICAL FIELDS SEARCHED (IPC) |
| A | US 2023/083965 A1 (LIU GUANGWEI [CN] ET AL) 16 March 2023 (2023-03-16) * the whole document * | 1-15 | G06V |
| A | CN 115 752 432 A (WUHAN ZHONGHAITING DATA TECH CO LTD) 7 March 2023 (2023-03-07) * the whole document * | 1-15 | |

The present search report has been drawn up for all claims

| Place of search | Date of completion of the search | Examiner |
|---|---|---|
| The Hague | 13 September 2023 | Mitzel, Dennis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 8560

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | | Publication date | Patent family member(s) | | Publication date |
|---|---|---|---|---|---|
| US 2019251372 | A1 | 15-08-2019 | CN | 110147698 A | 20-08-2019 |
| | | | EP | 3525132 A1 | 14-08-2019 |
| | | | JP | 2019139729 A | 22-08-2019 |
| | | | US | 2019251372 A1 | 15-08-2019 |
| CN 113807193 | A | 17-12-2021 | NONE | | |
| WO 2020192105 | A1 | 01-10-2020 | CN | 111750878 A | 09-10-2020 |
| | | | WO | 2020192105 A1 | 01-10-2020 |
| CN 107679520 | A | 09-02-2018 | NONE | | |
| CN 109583365 | B | 26-07-2022 | NONE | | |
| US 2023083965 | A1 | 16-03-2023 | AU | 2022209224 A1 | 16-02-2023 |
| | | | CN | 115690338 A | 03-02-2023 |
| | | | EP | 4124829 A1 | 01-02-2023 |
| | | | JP | 2023021098 A | 09-02-2023 |
| | | | US | 2023083965 A1 | 16-03-2023 |
| CN 115752432 | A | 07-03-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140358321 A1
- US 20190266418 A1
- US 10867190 B1